# EUROPÄISCHE PATENTANMELDUNG

(11) **EP 3 034 221 A1**
(43) Veröffentlichungstag der Anmeldung: **22.06.2016**
(21) Anmeldenummer: 14198671.1
(22) Anmeldetag: 17.12.2014
(51) Int. Cl.: B23F 23/04, B24B 27/00, B23F 5/04, B24B 41/02, B23Q 1/54, B23Q 39/02, B23Q 1/66

(54) **Schleifmaschine mit einem Schleifwerkzeug zum Wälzschleifen zweier Werkstücke**

(71) Anmelder: Klingelnberg AG, 8050 Zürich (CH)
(72) Erfinder: Bucksch, Felix, 76316 Malsch (DE); Gleixner, Isabell, 76275 Ettlingen (DE); Brieden, Christian, 42499 Hückeswagen (DE); Heckes, Leif, 45527 Hattingen (DE)
(74) Vertreter: Heusch, Christian

(57) **Zusammenfassung**

Schleifmaschine (100) mit einer Werkzeugspindel (1, 1.1) zum Aufnehmen und Drehantreiben eines Schleifwerkzeugs (2) um eine Werkzeugrotationsachse (B), mit einer ersten Werkstückspindel (3) zum Aufnehmen eines ersten Werkstücks (W1) und mit einer zweiten Werkstückspindel (4) zum Aufnehmen eines zweiten Werkstücks (W2), wobei
- die erste Werkstückspindel (3) und die zweite Werkstückspindel (4) auf einer Längsseite des an der Werkzeugspindel (1) aufgenommenen Schleifwerkzeugs (2) angeordnet sind,
- beide Werkstückspindeln (3, 4) parallel zueinander angeordnet sind,
- die Werkzeugspindel (1) entlang einer ersten Linearführung (5) verschiebbar gelagert ist, die sich parallel zu einer horizontalen Schrägachse (Y) erstreckt,
- die erste Werkstückspindel (3) und die zweite Werkstückspindel (4) mit dem gleichen lotrechten Horizontalabstand (a1) von der horizontalen Schrägachse (Y) beabstandet sind,
wobei die Werkzeugrotationsachse (B) zusammen mit der ersten Horizontalachse (Y) in einer Horizontalprojektion einen spitzen Winkel (W) bildet, der grösser ist als Null Grad.

## Beschreibung

### Gebiet der Erfindung

Gegenstand der Erfindung ist eine Vorrichtung. Insbesondere geht es um eine Vorrichtung zum Wälzschleifen, die zwei Werkstückspindeln umfasst.

### Hintergrund der Erfindung, Stand der Technik

Es gibt verschiedene Konzepte für die Anordnung der einzelnen Achsen in Maschinen, die zum Bearbeiten von Werkstücken ausgelegt sind. Dabei versucht man einerseits ein optimales Kosten-Nutzen-Verhältnis zu erzielen. Andererseits wird vor allem in der Serienproduktion häufig Wert auf die Produktivität, respektive den Durchsatz einer solchen Maschine gelegt.

Bekannt sind Maschinen, die auf einen Werkzeugaustausch setzen, um zum Bearbeiten eines Werkstücks je nach Bearbeitungsphase jeweils das geeignete Werkzeug bereitstellen zu können. Solche Maschinen können zum Beispiel einen Werkzeugrevolver aufweisen, der drehbar ist. Andere Maschinen arbeiten mit Werkstückachsen, die schwenkbar angeordnet sind. Eine Maschine gemäß EP 2305409 B1 zum Beispiel umfasst zwei Werkstückspindeln, die zwecks Verbringung von einer Schleifposition zu einer Beladeposition und umgekehrt um eine jeweilige Schwenkachse verschwenkt werden. Ein anderer Typ von Maschine weist ein Schleifwerkzeug und mindestens zwei Werkstückspindeln auf, die auf einem Träger drehbar gelagert sind. Je nach Drehposition des Trägers kann entweder ein erstes oder ein zweites Werkstück mit dem Schleifwerkzeug bearbeitet werden. Eine solche Maschine ist z.B. aus EP 1146983 B1 bekannt.

Eine andere Maschine weist mindestens eine Werkzeugspindel mit Schleifwerkzeug und zwei Werkstückspindeln auf, die zum Zusammenwirken des jeweiligen Werkstücks mit dem Schleifwerkzeug individuell an die Werkzeugspindel heranfahrbar sind. Zu diesem Zweck ist jede der Werkstückspindeln entlang einer eigenen Linearführung von einer Schleifposition zu einer Beladeposition und umgekehrt entlang der jeweiligen Linearführung translatorisch verfahrbar. Eine solche Maschine ist dem Dokument DE 202009013263 U1 zu entnehmen.

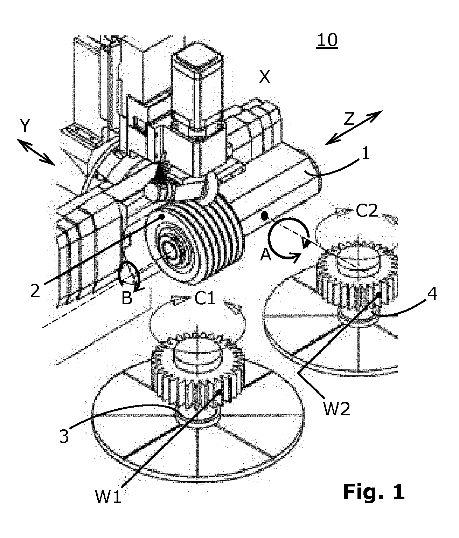

In Fig. 1 sind die Elemente einer beispielhaften Schleifmaschine 10 gezeigt, wobei in dieser Darstellung lediglich die wesentlichen Elemente beschriftet sind, und zwar sind dies die Werkzeugspindel 1 samt eines Schleifwerkzeugs 2, eine Werkstückspindel 3 mit einem Werkstück W1 und eine Werkstückspindel 4 mit einem Werkstück W2. Außerdem sind in dieser Darstellung die sechs Achsen gezeigt, die zum Wälzschleifen des Werkstücks W1 bzw. des Werkstücks W2 erforderlich sind. Hier kommen drei Linearachsen X, Y und Z zum Einsatz. Außerdem gibt es eine Rotationsachse B, um das Schleifwerkzeug 2 in einer Richtung drehantreiben zu können. Die Werkzeugspindel 1 samt des Schleifwerkzeugs 2 kann um eine Schwenkachse A geschwenkt werden. Weiterhin gibt es eine Rotationsachse C1, um das Werkstück W1 und eine Rotationsachse C2, um das Werkstück W2 drehantreiben zu können. Anhand der Fig. 1 kann man erkennen, dass eine ganze Reihe von koordinierten Linear-, Dreh- und Schwenkbewegungen erforderlich sind, um ein Werkstück W1 bzw. ein Werkstück W2 mit einem Schleifwerkzeug 2 wälzschleifen zu können.

Vor allem in der Serienproduktion ist es wichtig, dass bei Maschinen, in denen zwei Werkstücke nacheinander mit ein und demselben Werkzeug bearbeitet werden, die Qualität der Bearbeitung der beiden Werkstücke identisch ist.

Beim Wälzschleifen ist ein starker Spindelantrieb für das Drehantreiben des Schleifwerkzeugs 2 um die Werkzeugrotationsachse B erforderlich. Der Motor, der als Spindelantrieb dient, sitzt koaxial zu der Werkzeugrotationsachse B unmittelbar im Bereich des Schleifwerkzeugs 2, wie in Fig. 1 gezeigt. Würde man diesen Motor anders anordnen, so müsste zum Beispiel ein Winkelgetriebe zwischen dem Motor und der Spindelachse B vorgesehen werden. Die auftretenden Wälzabweichungen führen typischerweise zu Schwingungen, die letztendlich in Ungenauigkeiten am Werkstück resultieren.

Die Baugröße des Motors zum Drehantreiben des Schleifwerkzeugs 2 bringt räumliche Einschränkungen mit sich, da in jedem Fall eine Kollision des Motors mit dem Werkstück vermieden werden muss. Wenn man bei der Maschine 10 nach Fig. 1 z.B. das Werkstück W2 rechts neben dem ersten Werkstück W1 anordnen würde, wie hier rein beispielhaft gezeigt, so könnte das Schleifwerkzeug 2 samt Spindel 1 kaum noch an das erste Werkstück W1 heran gefahren werden, ohne dass die Spindel 1 mit dem zweiten Werkstück W2 kollidieren würde.

Aufgabe der vorliegenden Erfindung ist es, eine Maschinenkonstellation für eine Schleifmaschine zum Bearbeiten von Zahnrädern zu entwickeln, die bei einem einfachen technischen/mechanischen Aufbau eine reproduzierbar hohe Präzision der schleifenden Bearbeitung und trotzdem einen hohen Durchsatz hat.

Insbesondere geht es darum eine Schleifmaschine für das Wälzschleifen von Stirnrädern bereit zu stellen, die eine gleichbleibend hohe Präzision der wechselnden schleifenden Bearbeitung mehrerer Werkstücke ermöglicht.

Eine entsprechende Vorrichtung der Erfindung zeichnet sich durch die Merkmale des Patentanspruchs 1 aus.

Gemäss Erfindung kommt eine Schleifmaschine zum Einsatz, die mit einer Werkzeugspindel zum Aufnehmen und Drehantreiben eines Schleifwerkzeugs um eine Werkzeugrotationsachse sowie mit einer ersten Werkstückspindel zum Aufnehmen eines ersten Werkstücks und mit einer zweiten Werkstückspindel zum Aufnehmen eines zweiten Werkstücks ausgestattet ist. Bei dieser Schleifmaschine sind die erste Werkstückspindel und die zweite Werkstückspindel auf einer Längsseite des an der Werkzeugspindel aufgenommenen Schleifwerkzeugs angeordnet. Beide Werkstückspindeln sind parallel zueinander (vorzugsweise vertikal zu einem Maschinenbett) angeordnet. Die Werkzeugspindel ist entlang einer ersten Linearführung verschiebbar gelagert, wobei sich diese parallel zu einer horizontalen Schrägachse erstreckt. Die erste Werkstückspindel und die zweite Werkstückspindel sind mit demselben lotrechten Horizontalabstand von dieser horizontalen Schrägachse beabstandet. Die Werkzeugrotationsachse bildet gemäss Erfindung zusammen mit der horizontalen Schrägachse in einer Horizontalprojektion einen spitzen Winkel, der grösser ist als Null Grad.

Vorzugsweise liegt der spitze Winkel bei allen Ausführungsformen im Winkelbereich zwischen 10 und 60 Grad.

Anders als bei bekannten Maschinen, die zum Bearbeiten von zwei Werkstücken mit einem Werkzeug ausgelegt sind, hat die Schleifmaschine der Erfindung eine erste horizontal verlaufende Linearachse (auch horizontale Schrägachse genannt), die gegenüber den anderen (Horizontal-)Achsen der Maschine schräg angestellt ist. Ausserdem sind die beiden Werkstückspindeln auch entsprechend schräg angeordnet. Die erste horizontal verlaufende Linearachse und das Gemeinlot der beiden Werkstückspindeln liegen parallel zueinander. Es ist ein Vorteil dieser ungewöhnlichen Anordnung und Achskonstellation, dass in beiden Bearbeitungspositionen die Kragarmlänge, die sich durch das Zustellen des Werkzeugs parallel zur Zustellachse Richtung Werkstück ergibt, gleich ist. Dadurch ist gewährleistet, dass die Fertigungsgenauigkeit beim Bearbeiten der beiden Werkstücke gleich ist. Ausserdem bietet diese spezielle Konstellation mehr Platz für den Antrieb der Werkzeugspindel.

Gemäß Erfindung wird ein erstes Werkstück an einer ersten Werkstückspindel und anschliessend ein anderes Werkstück an einer zweiten Werkstückspindel mit einem einzigen (Schleif-) Werkzeug bearbeitet. Nachdem ein erstes Werkstück bearbeitet wurde, führt ein beweglicher Teil der Maschine samt des daran gelagerten (Schleif-) Werkzeugs eine Linearverschiebung aus, um das (Schleif-)Werkzeug aus einer ersten Bearbeitungsposition am ersten Werkstück in eine zweite Bearbeitungsposition am zweiten Werkstück zu bringen.

Vorzugsweise ist die Maschine der Erfindung bei allen Ausführungsformen so ausgelegt, dass die Maschine automatisch oder halbautomatisch mit den Werkstücken beschickt werden kann. Nachdem das erste Werkstück bearbeitet wurde, führt das Werkzeug die Bearbeitung des zweiten Werkstücks durch. In dieser Zeit kann das erste Werkstück entnommen und durch ein anderes (noch zu bearbeitendes) Werkstück ersetzt werden. Analog kann das zweite Werkstück entnommen und neu eingespannt werden, während das erste Werkstück bearbeitet wird.

Aufgrund der speziellen Konstellation gibt es ausreichend Platz für einen Greifer, der zum automatischen oder halbautomatischen Handling der Werkstücke eingesetzt wird. Optional ist die Maschine der Erfindung bei allen Ausführungsformen mit einer Handlingvorrichtung zum Einbringen und/oder Entnehmen von Werkstücken ausgestattet.

Die Maschinenkonstellation der Erfindung zeichnet sich insbesondere dadurch aus, dass das (Schleif-)Werkzeug nicht umgespannt werden muss.

Die Maschinenkonstellation der Erfindung zeichnet sich insbesondere dadurch aus, dass die erste Werkstückspindel und die zweite Werkstückspindel stationär in Bezug zur Schleifmaschine ausgebildet sind. Dabei weist gemäß Erfindung die Maschine vorzugsweise bei allen Ausführungsformen Handlingmittel für jede der Werkstückspindeln auf, um im Zusammenhang mit dem Einbringen (Beschicken) und/oder Entnehmen der Werkstücke die entsprechenden Handlingbewegungen ausführen können.

Der Begriff stationär, wie er hier verwendet wird, lässt bei allen Ausführungsformen nur Bewegungen in oder an den Werkstückspindeln zu, die im Zusammenhang mit dem Handling der Werkstücke erforderlich sind. Jede Werkstückspindel kann im Rahmen des Handlings beispielsweise ein Werkstück spannen (d.h. die Werkstückspindel kann öffnen und schließen) und sie kann das Werkzeug um die Werkstückachse drehen. Die Werkstückspindeln stehen bei allen Ausführungsformen fest in Bezug zum Maschinenbett, so dass keine Verlagerung oder Verschiebung der Werkstückspindeln in einer Horizontalebene möglich sind.

Um das Schleifwerkzeug mit dem jeweiligen Werkstück beim schleifenden Bearbeiten in Bezug zu setzen sind Zustellbewegungen erforderlich und um das Schleifwerkzeug mit dem jeweiligen Werkstück in eine Wechselwirkung zu bringen und die gewünschte (Zahn-)Geometrie zu erzeugen sind Eingriffs- und Bearbeitungsbewegungen erforderlich.. Diese Zustell-, Eingriffs- und Bearbeitungsbewegungen werden primär durch das Werkzeug und die Achsen ausgeführt, die dem Werkzeug zugeordnet sind, wobei das Werkstück um die Werkstückrotationsachse drehangetrieben wird.

In Hinsicht der Qualität und Wirtschaftlichkeit eignet sich die Maschinenkonstellation der Erfindung besonders zum abwechselnden kontinuierlichen Wälzschleifen von zwei Werkstücken. Das kontinuierliche Wälzschleifen ist ein generierendes Verfahren, bei dem eine Schleifschnecke zum Einsatz kommt.

Die Maschinenkonstellation der Erfindung bietet die Möglichkeit eine gute Genauigkeit bei der schleifenden Bearbeitung zu erzielen, da für die schleifende Bearbeitung an beiden Werkstücken mit den gleichen Schleifbedingungen erfolgt.

Die Werkstücke können je nach Ausführungsform im Gleich- oder Gegenlauf geschliffen werden.

Die Schleifmaschinen können bei allen Ausführungsformen mit digitaler Antriebstechnologie, sowohl für die Spindeln, als auch die Linearachsen ausgestattet sein. Damit ergeben sich höchste Wiederholgenauigkeiten.

Vorzugsweise wird bei allen Ausführungsformen ein zeitlich abwechselnder Werkstückwechsel vorgenommen. Die entsprechende Handlingzeit sollte dabei kürzer sein als die Gesamtzeit, die für das Bewegen des Werkzeugs vom ersten Werkstück zum zweiten Werkstück und zum Bearbeiten des zweiten Werkstücks erforderlich ist.

Weitere bevorzugte Ausführungsformen sind den jeweiligen Unteransprüchen zu entnehmen.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1**: zeigt eine schematische Perspektivansicht einer konventionellen Schleifmaschine, die dazu ausgelegt ist mit einem Schleifwerkzeug ein Werkstück schleifend zu bearbeiten;
- **FIG. 2A**: zeigt eine schematische Draufsicht einer ersten Schleifmaschine der Erfindung, die dazu ausgelegt ist mit einem Schleifwerkzeug ein erstes Werkstück und anschließend ein zweites Werkstück zu bearbeiten, wobei sich im gezeigten Moment das Schleifwerkzeug im Bereich des ersten Werkstücks befindet (erste Bearbeitungsposition genannt);
- **FIG. 2B**: zeigt eine schematische Draufsicht der ersten Schleifmaschine, wobei sich im gezeigten Moment das Schleifwerkzeug im Bereich des zweiten Werkstücks befindet (zweite Bearbeitungsposition genannt);
- **FIG. 3**: zeigt eine schematische Horizontalprojektion der relevanten Achsen einer Schleifmaschine der Erfindung;
- **FIG. 4**: zeigt eine schematische Vorderansicht einer zweiten Schleifmaschine der Erfindung, die ähnlich aufgebaut ist wie die Schleifmaschine nach Fig. 2A und 2B;
- **FIG. 5**: zeigt eine schematische Draufsicht einer weiteren Schleifmaschine, wobei die Schleifmaschine eine Handlingvorrichtung umfasst.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

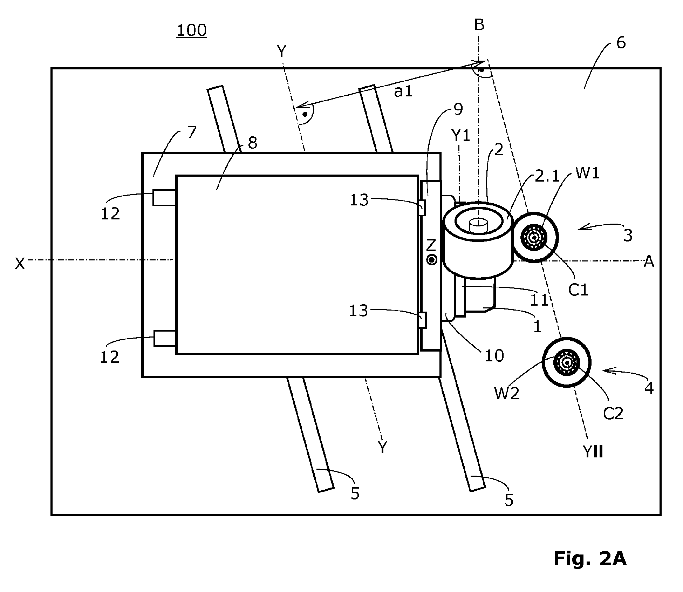

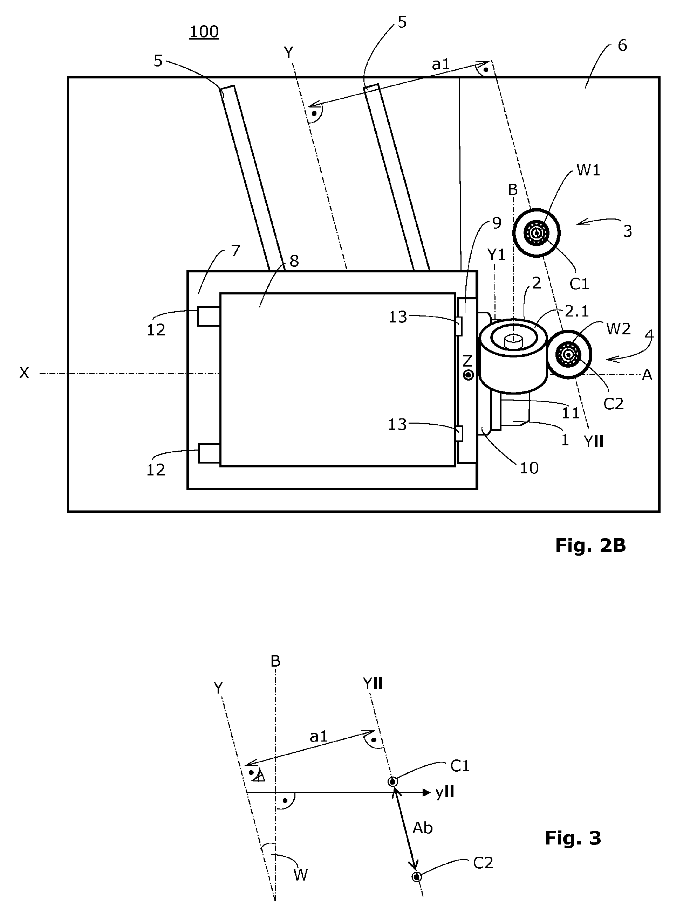

Eine Schleifmaschine 100 der Erfindung ist mit einer Werkzeugspindel 1 zum Aufnehmen und Drehantreiben eines Schleifwerkzeugs 2 um eine Werkzeugrotationsachse B (kurz auch als Werkzeugachse bezeichnet) ausgestattet. Weiterhin umfasst die Schleifmaschine 100 eine erste stationäre Werkstückspindel 3 zum Aufnehmen eines ersten Werkstücks W1 und eine zweite stationäre Werkstückspindel 4 zum Aufnehmen eines zweiten Werkstücks W2. Die erste Rotationsachse C1, die dem ersten Werkstück W1 zugeordnet ist, und die zweite Rotationsachse C2, die dem zweiten Werkstück W2 zugeordnet ist, stehen senkrecht auf der Zeichenebene der Fig. 2A und 2B.

Der Aufbau kann bei allen Ausführungsformen auch so sein, dass die Werkstückachsen horizontal statt vertikal (wie in Fig. 2A und 2B gezeigt) angeordnet sind.

Die erste Werkstückspindel 3 ist zum Aufnehmen eines ersten Werkstücks W1 und die zweite Werkstückspindel 4 ist zum Aufnehmen eines zweiten Werkstücks W2 ausgelegt. Wie in Fig. 2A und 2B gezeigt, sind die erste Werkstückspindel 3 und die zweite Werkstückspindel 4 auf einer gemeinsamen Längsseite des an der Werkzeugspindel 1 aufgenommenen Schleifwerkzeugs 2 angeordnet. Diese Längsseite liegt in der gezeigten Draufsicht rechts vom zylinderförmigen Schleifwerkzeug 2. Auf der gegenüberliegenden Längsseite des zylinderförmigen Schleifwerkzeugs 2 befinden sich Schlitten und andere Elemente der Maschine 100, die das Schleifwerkzeug 2 lagern und bewegen.

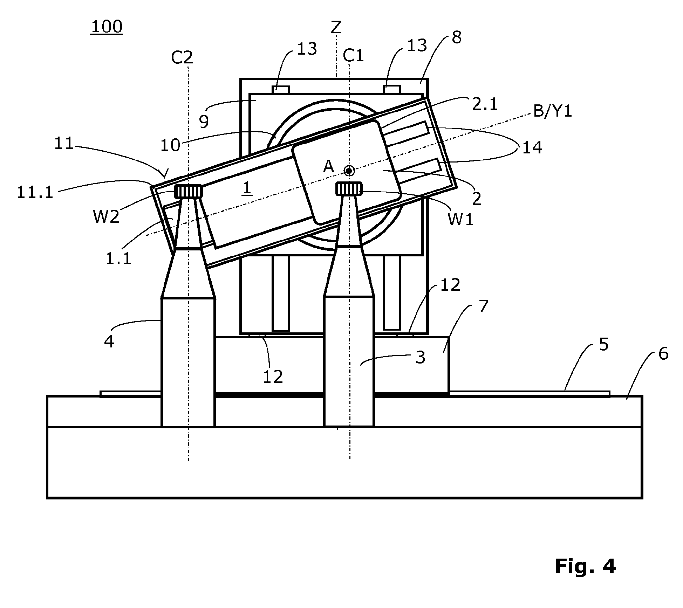

Die beide Werkstückspindeln 3, 4 sind vertikal angeordnet. Vorzugsweise verlaufen die Rotationsachsen C1 und C2 bei allen Ausführungsformen parallel zueinander, wie man in Fig. 4 gut erkennen kann.

Um die Zustell-, Eingriffs- und Bearbeitungsbewegungen ausführen zu können, die z.B. für das Wälzschleifen erforderlich sind, ist die Werkzeugspindel 1 entlang einer ersten Linearführung 5 verschiebbar gelagert. In Fig. 2A und 2B sind zwei parallel verlaufende Führungsstrukturen gezeigt. Bei allen Ausführungsformen können in bekannter Art und Weise z.B. Schienen oder Nuten als Linearführungen dienen. Die erste Linearführung 5 erstreckt sich parallel zu einer ersten horizontalen Horizontalachse Y. Die horizontale Schrägachse Y ist jedoch schräg zu anderen Horizontalachsen angeordnet (siehe auch Fig. 3), respektive schräg zu Achsen angeordnet, die in eine gemeinsame Horizontalebene projiziert wurden.

Die Maschine 100 umfasst eine Werkzeugrotationsachse B, um die herum das (Schleif-)Werkzeug 2 beim Wälzschleifen drehangetrieben wird. Diese Werkzeugachse B bildet zusammen mit der ersten Horizontalachse Y in einer Horizontalprojektion einen spitzen Winkel W, der grösser ist als Null Grad. In Fig. 3 ist eine entsprechende Darstellung der relevanten Achsen gezeigt. Der erwähnte spitze Winkel W ist im Schnittpunkt der beiden Achsen B und Y in einer Horizontalprojektion (hier die Zeichenebene) definiert.

Vorzugsweise liegt der spitze Winkel W bei allen Ausführungsformen im Winkelbereich zwischen 10 und 60 Grad. Im gezeigten Ausführungsbeispiel der Fig. 2A und Fig. 3 beträgt der spitze Winkel W ca. 15 Grad.

Die erste Werkstückspindel 3 und die zweite Werkstückspindel 4 sind beide mit dem gleichen lotrechten Horizontalabstand a1 von der ersten Horizontalachse Y beabstandet (siehe auch Fig. 3).

Das Gemeinlot zwischen den Rotationsachsen C1 und C2 verläuft parallel zu der ersten Horizontalachse Y. In den Figuren 2A, 2B und 3 ist die Orientierung des Gemeinlots durch eine gestrichelte Gerade dargestellt, die die beiden parallelen Rotationsachsen C1 und C2 auf dem kürzesten Weg miteinander verbindet. Die entsprechende gestrichelte Gerade ist mit dem Bezugszeichen **YII** bezeichnet, um anzudeuten, dass sie parallel zu Y verläuft. Das Gemeinlot zwischen den Rotationsachsen C1 und C2 definiert den Abstand Ab, der in Fig. 3 gezeigt ist.

Der Abstand Ab der beiden Rotationsachsen C1 und C2 (gemessen entlang der Geraden **YII,** wie in Fig. 3 gezeigt) erfüllt vorzugsweise bei allen Ausführungsformen die Vorgabe, dass dieser mindestens zweimal so gross ist wie der Werkstückdurchmesser der Werkstücke W1, W2 in der Draufsicht betrachtet.

Wie man anhand der Fig. 1 erkennen kann, braucht es speziell zum Wälzschleifen eine ganze Reihe von weiteren Achsen, um die erforderlichen Zustell-, Eingriffs- und Bearbeitungsbewegungen ausführen zu können.

Anhand der Fig. 2A und 2B wird nun die Achsanordnung einer bevorzugten Ausführungsform erläutert. Es wird zwischen einer Hauptachse und Nebenachsen unterschieden. Als Hauptachse wird eine Achse bezeichnet, die sämtliche anderen Achsen trägt. Bei den Ausführungsformen nach Fig. 2A, 2B und nach Fig. 3 dient jeweils die Y-Achse als Hauptachse. Diese Achse wird auch als horizontale Schrägachse Y bezeichnet.

Durch eine Linearbewegung entlang der horizontalen Schrägachse Y, kann die Maschine 100 von einer ersten Bearbeitungsposition in eine zweite Bearbeitungsposition überführt werden. In Fig. 2A ist die Maschine 100 in der ersten Bearbeitungsposition und in Fig. 2B in der zweiten Bearbeitungsposition gezeigt. Im direkten Vergleich der beiden Figuren 2A und 2B kann man erkennen, dass diese beiden Bearbeitungspositionen, ausser der anderen Lage in Bezug zur Y-Achse, identisch sind. D.h. es mussten keine anderen Achsbewegungen ausgeführt werden. Damit ist in beiden Bearbeitungspositionen der Kragarm der gleiche. Damit sind unter anderem auch die Momente gleich, die aufgrund des schweren Motors der Werkzeugspindel 1 am gesamten Aufbau der Maschine 100 wirken.

Die Maschine 100 umfasst ein Maschinenbett 6, an dem die erste Linearführung 5 und die beiden Werkstückspindeln 3, 4 stationär angeordnet sind. Als Maschinenbett 6 wird bei allen Ausführungsformen ein ortsfester Maschinenunterbau oder -ständer bezeichnet, wie hinlänglich bekannt.

Die Schleifmaschine 100 umfasst weiterhin einen ersten Linearschlitten 7, der parallel zur horizontale Schrägachse Y entlang der ersten Linearführung 5 beweglich gelagert ist. In Fig. 2A, 2B umfasst die erste Linearführung 5 zwei beispielhaft gezeigte Führungsstrukturen, die mit dem Bezugszeichen 5 markiert sind. Auf der Unterseite des ersten Linearschlittens 7 können Führungsschuhe angeordnet sein, um ein Gleiten des ersten Linearschlittens 7 entlang der Führungsstrukturen zu ermöglichen. Diese Führungsstrukturen verlaufen parallel zu der bereits erwähnten horizontalen Schrägachse Y. Diese horizontale Schrägachse Y dient als Hauptachse der Schleifmaschine 100.

Die Schleifmaschine 100 umfasst weiterhin einen zweiten (vorzugsweise turm- oder ständerartigen) Linearschlitten 8, der horizontal beweglich auf dem ersten Linearschlitten 7 gelagert ist. Der zweite Linearschlitten 8 ist parallel zu einer zweiten Horizontalachse X bewegbar. Diese zweite Horizontalachse X wird auch als Zustellachse bezeichnet und sie verläuft in einer Horizontalprojektion betrachtet schräg zu der ersten Horizontalachse Y. Der zweite Linearschlitten 8 kann beispielsweise entlang von Führungsstrukturen geführt sein, die hier mit dem Bezugszeichen 12 bezeichnet sind. Auf der Unterseite des zweiten Linearschlittens 8 können Führungsschuhe angeordnet sein, um ein Gleiten des zweiten Linearschlittens 8 entlang der Führungsstrukturen 12 zu ermöglichen.

Die Schleifmaschine 100 umfasst weiterhin einen dritten Linearschlitten 9, der im gezeigten Ausführungsbeispiel beweglich an dem zweiten Linearschlitten 8 gelagert ist. Der dritte Linearschlitten 9 ist parallel zu einer ersten Vertikalachse Z bewegbar, die senkrecht im Raum steht. Die erste Vertikalachse Z wird auch als Hubachse bezeichnet. Der dritte Linearschlitten 9 sitzt hier im gezeigten Ausführungsbeispiel an einer vorderen Seitenfläche des zweiten Linearschlittens 8. In der Vorderansicht der Fig. 4 ist ein Blick auf diese vordere Seitenfläche des zweiten Linearschlittens 8 gezeigt.

Die Schleifmaschine 100 umfasst weiterhin einen Schwenktisch 10, der um eine dritte Horizontalachse A schwenkbar gelagert ist. Die dritte Horizontalachse A wird auch als Werkzeug-Schwenkachse bezeichnet. Der Schwenktisch 10 trägt direkt oder indirekt die Werkzeugspindel 1. Die dritte Horizontalachse A steht, in eine gemeinsame Horizontalebene projiziert, senkrecht zu der Werkzeugrotationsachse B. In der in Fig. 2A, 2B gezeigten Stellung zeigt die Stirnfläche 2.1 des beispielhaft gezeigten zylinderförmigen Werkzeugs 2 schräg nach oben. Bei dem beispielhaft gezeigten Werkzeug 2 handelt es sich um eine Schleifschnecke, die in den Abbildungen aber nicht weiter detailliert ist.

Vorzugsweise trägt der der Schwenktisch 10 bei allen Ausführungsformen einen vierten Linearschlitten 11. Die entsprechende Achse wird als Shiftachse bzw. als Y1-Shiftachse bezeichnet. Diese Y1-Shiftachse befindet sich auf der Schwenkachse A und trägt die Werkzeugspindel 1. Vorteil ist, dass die Y-Achse bei dieser bevorzugten Ausführungsform nur zum horizontalen Verfahren zwischen den beiden Arbeitspositionen benutzt wird und für sogenannte Shiftbewegungen nur die Y1 Shiftachse (mit geringer Masse) eingesetzt werden muss. Dieser vierte Linearschlitten 11 ermöglicht eine Linearverschiebung (Shiftbewegung) der Werkzeugspindel 1 samt Werkzeug 2 parallel zu der Werkzeugachse B in einer Lateralebene. Als Lateralebene wird eine Ebene bezeichnet, die senkrecht zum Maschinenbett 6 bzw. zur Zeichenebene steht. In Fig. 4 liegt diese Lateralebene in der Zeichenebene.

Das bisher Beschriebene lässt sich auch auf die Ausführungsform der Fig. 4 übertragen. Die Ausführungsform der Fig. 4 unterscheidet sich von der Ausführungsform der Fig. 2A, 2B primär durch den Aufbau der Nebenachsen, die von dem Schwenktisch 10 getragen werden.

Die Staffelung der verschiedenen Achsen kann auch in anderer Reihenfolge realisiert werden. So kann beispielsweise der Schlitten 8 in einer Lateralebene vertikal verfahrbar sein und einen Schlitten 9 tragen, der am Schlitten 8 in horizontaler Richtung verfahrbar ist.

Der vierte Linearschlitten 11 kann auch eine Konfiguration haben, wie in Fig. 4 gezeigt. Z.B. kann der vierte Linearschlitten 11 eine (vorzugsweise rechteckige) Grundform oder einen Grundkörper 11.1 haben, die, wie in Fig. 4 zu erkennen ist, in einer Lateralebene der Maschine 100 liegt. In Fig. 4 entspricht diese Lateralebene der Zeichenebene. An der Grundform oder dem Grundkörper 11.1 können auf der Vorderseite, die den Werkstücken W1, W2 zugewandt ist, Führungsstrukturen angeordnet sein. Bei der Ausführungsform nach Fig. 4 kommen zwei parallel zur B-Achse verlaufende Führungsstrukturen 14 zum Einsatz. Hier liegt somit die Y1-Shiftachse parallel zur B-Achse.

Auf der Unterseite der Werkzeugspindel 1 können Führungsschuhe angeordnet sein, um ein Gleiten der Werkzeugspindel 1 entlang der Führungsstrukturen 14 zu ermöglichen.

Die Maschine 100 zeichnet sich also dadurch aus, dass die Werkzeugspindel 1 über vier Linearführungen 5, 12, 13, 14 und eine Schwenkachse A beweglich an dem Maschinenbett 6 gelagert ist. Die genannte Schwenkachse A steht dabei senkrecht zu der ersten Rotationsachse RA1 der ersten Werkstückspindel 3 und zu der zweiten Rotationsachse RA2 der zweiten Werkstückspindel 4.

Es ist ein Vorteil dieser ungewöhnlichen Anordnungen und Achskonstellationen der Figuren 2A, 2B und 4, dass in beiden Bearbeitungspositionen der Kragarm, der sich durch das Zustellen des Werkzeugs 2 Richtung Werkstück C1 oder C2 ergibt, gleich ist. Dadurch ist gewährleistet, dass die Fertigungsgenauigkeit beim Bearbeiten der beiden Werkstücke C1, C2 gleich ist. Ausserdem bietet diese spezielle Konstellation mehr Platz für den Antrieb der Werkzeugspindel 1. Vor allem in Fig. 4 ist gut zu erkennen, dass die Werkzeugspindel 1, samt des koaxial dazu angeordneten Motors 1.1 relativ auslanden sind. Wären die zweite Werkstückspindel 4 und das Werkstück C2 nicht versetzt zur ersten Werkstückspindel 3 angeordnet, so käme es zu Kollisionen der Werkzeugspindel 1 oder des Motors 1.1 mit der zweiten Werkstückspindel 4 oder mit dem Werkstück C2.

Vorzugsweise umfasst die Maschine 100 in allen Ausführungsformen eine Handlingvorrichtung 20, die zum Einbringen und/oder Entnehmen von Werkstücken C1/C2 ausgelegt ist. Da abwechselnd erst ein Werkstück C1 an der Werkstückspindel 3 und dann anschließend ein Werkstück C2 an der Werkstückspindel 4 mit dem Werkzeug 2 bearbeitet werden, bleibt ausreichend Zeit, um ein fertig bearbeitetes Werkstück zu entnehmen und ein neues Werkstück (z.B. einen Rohling) einzubringen und an der entsprechenden Spindel einzuspannen.

Vorzugsweise ist daher Handlingvorrichtung 20 bei allen allen Ausführungsformen zum abwechselnden Entnehmen und Einbringen eines Werkstücks an einer ersten der beiden Werkstückspindeln 3 und dann zum Entnehmen und Einbringen eines Werkstücks an einer zweiten der beiden Werkstückspindeln 4 ausgelegt. Zu diesem Zweck ist diese Handlingvorrichtung 20 bei allen Ausführungsformen vorzugsweise äquidistant (abstandsgleich in horizontaler Richtung betrachtet) zu den beiden Werkstückspindeln 3 und 4 angeordnet.

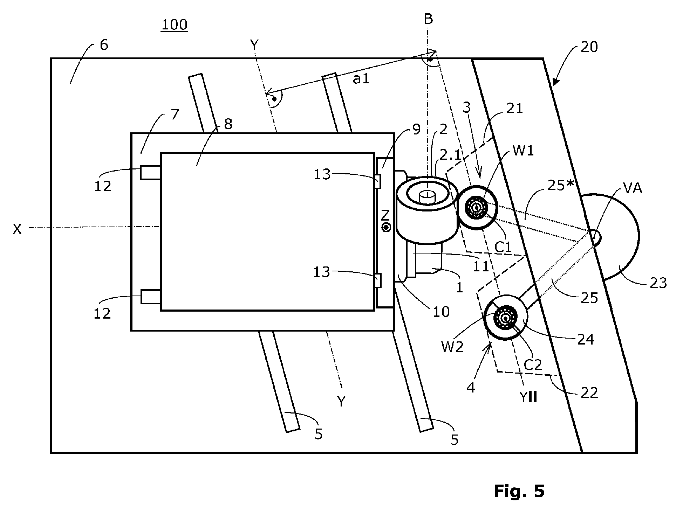

In Fig. 5 ist ein schematisches Beispiel einer Maschine 100 gezeigt, die mit einer beispielhaften Handlingvorrichtung 20 ausgestattet ist. Diese Handlingvorrichtung 20 kann zum Beispiel einen Portalaufbau haben, wie in Fig. 5 angedeutet. Dieser Portalaufbau erstreckt sich vorzugsweise bei allen Ausführungsformen parallel zu der schräg verlaufenden Hauptachse Y.

Die Handlingvorrichtung 20 kann bei allen Ausführungsformen innere Schleusentore 21, 22 umfassen, die parallel zur x-Achse nach oben und unten verschoben werden können. In Fig. 5 haben diese beiden Schleusentore 21, 22 in der Draufsicht eine Trapezform. Ihre Umrisslinien sind gestrichelt dargestellt. Das Schleusentor 21 ist dem Werkstück C1 und der Spindel 3 zugeordnet. Das Schleusentor 22 ist dem Werkstück C2 und der Spindel 4 zugeordnet. Das Schleusentor 22 kann geschlossen sein während das Schleusentor 21 beim Bearbeiten des Werkstücks C1 mit dem Werkzeug 2 offen steht, und umgekehrt. So kann beispielsweise ein Greifer der Handlingvorrichtung 20 vor herumfliegenden Spänen und vor Kühlmittel geschützt werden.

Die Handlingvorrichtung 20 kann bei allen Ausführungsformen zusätzlich oder alternativ auch äußere Schleusentore umfassen (nicht gezeigt), die parallel zur x-Achse nach oben und unten verschoben werden können. Diese äußere Schleusentore werden vorzugsweise im Gegentakt zu den inneren Schleusentoren 21, 22 auf und ab bewegt.

Die Handlingvorrichtung 20 kann bei allen Ausführungsformen Gegenhalter umfassen (nicht gezeigt), die parallel zur x-Achse nach oben und unten verschoben werden können, um die jeweiligen Werkstücke C1, C2 von oben her in axialer Richtung halten zu können.

Die Handlingvorrichtung 20 kann bei allen Ausführungsformen eine äquidistant zu den beiden Werkstückspindeln 3, 4 angeordnete Säulen- oder Turmstruktur 23 umfassen, die einen Greifer 24 an einem schwenkbaren Ausleger 25 trägt. In Fig. 5 ist eine Momentaufnahme gezeigt, in welcher der Ausleger 25 samt Greifer 24 mit dem Einbringen eines Werkstücks C2 in die Werkstückspindel 4 befasst ist. Nachdem die Bearbeitung des Werkstücks C1 mit dem Werkzeug 2 beendet ist, wird der Ausleger 25 samt Greifer 24 um eine Vertikalachse VA der Handlingvorrichtung 20 in eine andere Position geschwenkt. Die Vertikalachse VA verläuft vorzugsweise parallel zur x-Achse. In Fig. 5 ist der Ausleger in dieser anderen Position mit dem Bezugszeichen 25* bezeichnet und der Ausleger 25 ist durch gepunktete Umrisslinien angedeutet.

**Bezugszeichen**

| | |
|---|---|
| Werkzeugspindel | 1 |
| Motor | 1.1 |
| Schleifwerkzeug | 2 |
| Stirnfläche | 2.1 |
| 1. Werkstückspindel | 3 |
| 2. Werkstückspindel | 4 |
| erste Linearführung | 5 |
| Maschinenbett | 6 |
| erster Linearschlitten | 7 |
| zweiter Linearschlitten | 8 |
| dritter Linearschlitten | 9 |
| Schwenktisch | 10 |
| vierter Linearschlitten | 11 |
| Grundform | 11.1 |
| zweite Linearführung | 12 |
| dritte Linearführung | 13 |
| vierte Linearführung | 14 |
| | |
| Handlingvorrichtung | 20 |
| Schleusentore | 21, 22 |
| Säulen- oder Turmstruktur | 23 |
| Greifer | 24 |
| Ausleger in erster Position | 25* |
| Ausleger in zweiter Position | 25 |
| Schleifmaschine | 100 |
| Abstand | Ab |
| lotrechter Horizontalabstand | a1 |
| Schwenkachse | A |
| erste Werkstückachse | C1 |
| zweite Werkstückachse | C2 |
| horizontale Schrägachse | Y |
| Parallele zur ersten Horizontalachse | **YII** |
| Werkzeug(rotations)achse | /B/ |
| erste Rotationsachse / erste Werkstückachse | C1 |
| zweite Rotationsachse / zweite Werkstückachse | C2 |
| Vertikalachse | VA |
| Winkel | W |
| Erstes Werkstück | W1 |
| zweites Werkstück | W2 |
| erste Vertikalachse | /Z/ |
| zweite Horizontalachse | /X/ |
| Parallele zur y-Achse | **YII** |
| dritte Horizontalachse / Werkzeug-Schwenkachse | A |

## Patentansprüche

1. Schleifmaschine (100) mit einer Werkzeugspindel (1, 1.1) zum Aufnehmen und Drehantreiben eines Schleifwerkzeugs (2) um eine Werkzeugrotationsachse (B), mit einer ersten Werkstückspindel (3) zum Aufnehmen eines ersten Werkstücks (C1) und mit einer zweiten Werkstückspindel (4) zum Aufnehmen eines zweiten Werkstücks (C2), wobei
- die erste Werkstückspindel (3) und die zweite Werkstückspindel (4) auf einer Längsseite des an der Werkzeugspindel (1) aufgenommenen Schleifwerkzeugs (2) angeordnet sind,
- beide Werkstückspindeln (3, 4) parallel zueinander angeordnet sind,
- die Werkzeugspindel (1) entlang einer ersten Linearführung (5) verschiebbar gelagert ist, die sich parallel zu einer horizontalen Schrägachse (Y) erstreckt,
- die erste Werkstückspindel (3) und die zweite Werkstückspindel (4) mit dem gleichen lotrechten Horizontalabstand (a1) von der horizontalen Schrägachse (Y) beabstandet sind,
wobei die Werkzeugrotationsachse (B) zusammen mit der horizontalen Schrägachse (Y) in einer Horizontalprojektion einen spitzen Winkel (W) bildet, der grösser ist als Null Grad.

2. Schleifmaschine (100) nach Anspruch 1, **dadurch gekennzeichnet, dass** sie ein Maschinenbett (6) umfasst, an dem die erste Linearführung (5) und die beiden Werkstückspindeln (3, 4) stationär angeordnet sind.

3. Schleifmaschine (100) nach Anspruch 1 oder 2, **dadurch gekennzeichnet, dass** sie umfasst:
- einen ersten Linearschlitten (7), der horizontal entlang der ersten Linearführung (5) beweglich gelagert ist,
- einen zweiten Linearschlitten (8), der horizontal beweglich auf dem ersten Linearschlitten (7) gelagert ist, wobei der zweite Linearschlitten (8) parallel zu einer ersten Horizontalachse (X) bewegbar ist, die in einer Horizontalprojektion betrachtet schräg zu der horizontalen Schrägachse (Y) verläuft.

4. Schleifmaschine (100) nach Anspruch 3, **dadurch gekennzeichnet, dass** sie umfasst:
- einen dritten Linearschlitten (9), der beweglich an dem zweiten Linearschlitten (8) gelagert ist, wobei der dritte Linearschlitten (9) parallel zu einer ersten Vertikalachse (Z) bewegbar ist, die senkrecht im Raum steht.

5. Schleifmaschine (100) nach Anspruch 3 oder 4, **dadurch gekennzeichnet, dass** sie umfasst:
- einen Schwenktisch (10), der um eine horizontale Schwenkachse (A) schwenkbar gelagert ist und der direkt oder indirekt die Werkzeugspindel (1) trägt, wobei die horizontale Schwenkachse (A) in eine gemeinsame Horizontalebene projiziert senkrecht zu der Werkzeugrotationsachse (B) verläuft.

6. Schleifmaschine (100) nach Anspruch 5, **dadurch gekennzeichnet, dass** der Schwenktisch (10) einen vierten Linearschlitten (11) trägt, der eine Linearverschiebung (Y1) der Werkzeugspindel (1) parallel zu der Werkzeugrotationsachse (B) in einer Lateralebene ermöglicht.

7. Schleifmaschine (100) nach Anspruch 1, **dadurch gekennzeichnet, dass**
- die Werkzeugspindel (1) über vier Linearführungen (5, 12, 13, 14) und eine Schwenkachse (A) beweglich an einem Maschinenbett (6) gelagert ist, wobei die Schwenkachse (A) senkrecht zu einer ersten Rotationsachse (C1) der ersten Werkstückspindel (3) und senkrecht zu einer zweiten Rotationsachse (C2) der zweiten Werkstückspindel (4) verläuft, und dass
- die erste Rotationsachse (C1) und die zweite Rotationsachse (C2) stationär auf dem Maschinenbett (6) angeordnet sind.

8. Schleifmaschine (100) nach einem der Ansprüche 1 bis 7, **dadurch gekennzeichnet, dass** sie eine Handlingvorrichtung (20) zum Einbringen und/oder Entnehmen von Werkstücken (W1, W2) in die Schleifmaschine (100) umfasst.

9. Schleifmaschine (100) nach Anspruch 8, **dadurch gekennzeichnet, dass** die Handlingvorrichtung (20) äquidistant zu den beiden Werkstückspindeln (3, 4) angeordnet ist und, dass die Handlingvorrichtung (20) dazu ausgelegt ist abwechselnd das Handling eines ersten Werkstücks (W1) und dann das Handling eines zweiten Werkstücks (W2) vorzunehmen.
